# EUROPÄISCHE PATENTSCHRIFT

(11) **EP 2 900 788 B1**
(45) Veröffentlichungstag und Bekanntmachung des Hinweises auf die Patenterteilung: **08.04.2020**
(21) Anmeldenummer: 13766978.4
(22) Anmeldetag: 26.09.2013
(51) Int. Cl.: C09K 8/57, C04B 41/48, C04B 41/49, C09K 8/575

(54) **ROBUSTES, VON DER EINWIRKUNG KATALYTISCH AKTIVER SUBSTANZEN UNABHÄNGIGES BINDEMITTEL ZUR ANWENDUNG IN DER ÖL UND GAS FÖRDERNDEN INDUSTRIE**
ROBUST BINDER, WHICH IS INDEPENDENT FROM THE INFLUENCE OF CATALYTICALLY ACTIVE SUBSTANCES, FOR USE IN THE CRUDE OIL AND NATURAL GAS INDUSTRY
LIANT SOLIDE INDÉPENDANT DE L'ACTION DE SUBSTANCES CATALYTIQUEMENT ACTIVES DESTINÉ À ÊTRE EMPLOYÉ DANS L'INDUSTRIE DE L'EXTRACTION DE PÉTROLE ET DE GAZ

(30) Priorität: 27.09.2012 DE 102012019149
(43) Veröffentlichungstag der Anmeldung: 05.08.2015
(73) Patentinhaber: EPG (Engineered nanoProducts Germany) AG, 64347 Griesheim (DE)
(72) Erfinder: SCHMIDT, Christian, 66119 Saarbrücken (DE); SCHMIDT, Helmut, 66130 Saarbrücken-Güdingen (DE)
(74) Vertreter: Held, Stephan
(86) Internationale Anmeldenummer: PCT/EP2013/070121
(87) Internationale Veröffentlichungsnummer: WO 2014/049083

(56) Entgegenhaltungen:
- GB-A- 1 295 902
- GB-A- 1 347 068
- US-A- 5 254 638
- US-A1- 2009 025 021
- US-A1- 2009 264 323

## Beschreibung

Die Erfindung betrifft die Verwendung eines Bindemittels zur Stabilisierung der Bindemittel-Gelbildungszeit bei der Verfestigung einer geologischen Formation in Anwesenheit von katalytisch aktiven Substanzen.

Bindemittel zur Bindung von Schüttungen und losen Formationen sind bekannt. So beschreiben z.B. DE-A-102004004615, EP-A-06706316, WO 2007/121972, WO 2007/121975 und WO 2009/106562 Systeme, die zur Konsolidierung von Schüttungen oder losen Formationen verwendet werden. In der Regel wird dabei so vorgegangen, dass ein reaktives lösliches System in eine Schüttung oder lose Formation infiltriert und über eine Reaktion verfestigt wird. Erfolgt die Aushärtung durch einen radikalischen Polymerisationsprozess, so werden gewöhnlich Peroxide als thermische Polymerisationsinitatoren eingesetzt.

Peroxide verschiedenster Art sind als wichtige Radikalstarter bei der Polymerisation von organischen Doppelbindungen, insbesondere in Olefinen, bekannt. Der Mechanismus beruht auf dem Zerfall der Sauerstoff-Sauerstoff-Bindung in zwei Radikale beinhaltende Fragmente, die ihr radikalisches Elektron auf die Doppelbindung übertragen und somit eine Kettenreaktion in Gang setzen, die letztendlich zur Bildung von Polymeren führt. Der Zerfall der Sauerstoff-Sauerstoff-Bindung kann durch Zufuhr von Energie, zum Beispiel thermischer oder Lichtenergie, erfolgen.

Die Stabilität der Sauerstoff-Sauerstoff-Bindung hängt sehr stark von der Struktur des Moleküls ab, das diese Bindung trägt. Je nach Kompensationsfähigkeit der Polarität der Sauerstoff-Sauerstoff-Bindung durch die restlichen Bindungen im Molekül ist die Radikalbildung durch den Zerfall der Sauerstoff-Sauerstoffbindung in relativ unterschiedlichen Temperaturbereichen möglich. Dies hat man sich zur Steuerung der Polymerisationstemperatur von Olefinen in der chemischen Technik zu Nutze gemacht. Einsatztemperaturen von 20-120°C zum Auslösen der Polymerisation sind möglich.

Bedingt durch die Metastabilität der Sauerstoff-Sauerstoff-Bindung können katalytisch wirkende Verbindungen die thermisch bedingte Zerfallstemperatur und damit die Bildung von Radikalen deutlich verändern. So ist zum Beispiel bekannt, dass Metallionen wie Kupferionen oder Eisenionen einen deutlichen Einfluss auf die Zerfallstemperatur haben. Darüber hinaus können kristalline Verbindungen, wie zum Beispiel Oxide wie z.B. Aluminiumoxide, Schichtsilikate oder Eisenoxide die Zerfallstemperatur beeinflussen. Dieser Effekt wird verständlicherweise umso größer, je kleiner die Oxid-Strukturen sind. Dies ist aus der Katalysatorchemie bekannt, weswegen man dazu tendiert, katalytisch wirkende Festkörper in möglichst kleiner Verteilung anzuwenden (Vergrößerung der aktiven Oberfläche; Nano-Katalyse).

Katalytisch auf die Zerfallstemperatur wirkende Komponenten stören jedoch bei vielen Anwendungen, insbesondere wenn nicht bekannt ist, welche Komponenten bei bestimmten Anwendungen in welcher Konzentration vorliegen. Dann ist eine Steuerung des Polymerisationsprozesses schwierig wenn nicht unmöglich. Darüber hinaus können andere thermodynamische Parameter, wie zum Beispiel der pH-Wert oder das Lösungsmittel einen starken Einfluss auf die Zerfallsgeschwindigkeit und Radikalbildung haben.

Eine genaue Einstellung der Parameter ist aber bei der beabsichtigten Anwendung, nämlich beim Behandeln einer geologischen Formation bei der Öl- und Gasgewinnung extrem schwierig, wenn nicht unmöglich.

So kann das Bindemittel bereits beim Einpumpen in die Formation durch den Kontakt mit Leitungen und Produktionsequipment mit Metallionen und Eisenoxiden verunreinigt werden. Die Rohre sind in der Regel aus weichem Stahl und damit nicht sehr korrosionsfest, weil sie aufgerollt werden müssen und in so genannten Coils von bis zu mehreren 1000 m Länge verwendet werden. In der Regel sind diese Coils innen von einer rauen Rostschicht überzogen und es hat sich herausgestellt, dass sowohl diese Rostschichten als auch das blanke Metall einen sehr starken katalytischen Effekt auf den Zerfall von Peroxiden aufweisen, wodurch sich die Gelbildungszeit bei Verwendung von Peroxiden als Initiatoren stark verkürzen können.

Ein weiterer kritischer Punkt ist die außerordentlich unterschiedliche Zusammensetzung der geologischen Formationen, z.B. in Hinblick auf die vorhandenen Mineralien, Sandarten, Porosität usw. Dies bedeutet, dass solche Binder auf Basis von Peroxid-Initiatoren je nach geographischer Lage kritisch bzw. zu instabil sein können.

Eine Anwendung, bei dem diese Effekte besonders störend sind, sind, wie schon kurz angemerkt, Anwendungen von Bindemitteln mit zu verfestigenden Monomeren in der öl- und gasfördernden Industrie. Dabei werden zum Beispiel zur Stabilisierung von geologischen Formationen Monomere mit polymerisierbaren Doppelbindungen in gelöster oder flüssiger Form in diese eingepumpt. Die in der Regel in den Formationen herrschenden höheren Temperaturen werden für die radikalische Polymerisation genutzt. Wichtig dabei ist, dass dies erst vor Ort durch den temperaturbedingten Zerfall der Initiatoren und nicht schon vorher katalytisch passiert, da sonst die Gefahr der Verstopfung von Zuleitungen, Pumpen und Ventilen, aber auch der Poren in der Formation besteht. Daher muss das Abbindeverhalten des Bindemittels so eingestellt werden, dass eine Verfestigung sicher erst dann beginnt, wenn die Infiltration und die Wiederherstellung der Permeabiltiät der Formation abgeschlossen ist.

Bei Untersuchungen zur Festlegung der Polymerisationszeit mit so genannten anorganisch-organischen Bindemitteln, z.B. Nanoglue®, bei denen die Verfestigung durch Silane mit Methacrylatgruppen sowie über Diacrylate durch Polymerisation in der Formation abläuft, wurde festgestellt, dass Bestandteile der Formation, Metalle oder eisenoxidhaltige Komponenten, z.B. in Form von Sanden, die Radikalbildung bei Peroxiden unkontrollierbar beeinflussen und kaum Voraussagen mehr in Bezug auf die gewünschte temperaturbedingte Polymerisation nach Injektion der Bindemittel in die Formation möglich sind.

So sind zum Beispiel bei Kontakt mit dem Coiled Tubing bzw. der Zugabe von Sanden unterschiedlicher Korngröße, Kornform und Mineralität bei Verwendung von Peroxiden Unterschiede in der Gel-Bildungszeit von über 50% beobachtet worden. Problematisch ist hierbei, dass jeweils eine unkontrollierte Beschleunigung zu beobachten war, wodurch die Gefahr eines zu frühen Abbindens des Bindemittels stark erhöht wird.

Damit wird eine Verwendung solcher Systeme, die im Grunde einen ausgezeichneten Verfestigungsmechanismus besitzen, in der Öl- und Gasindustrie riskant, wenn nicht gar unmöglich.

US 2009/264323 A1 betrifft ein Verfahren zur Herstellung von konsolidierten Proppants mit einem Bindemittel, das ein Kondensat aus Organosilan und einer Metallverbindung sowie einen organischen Vernetzer umfasst. Das Bindemittel kann zugesetzt werden, nachdem das Proppant in die Spalte einer Formation positioniert wurde.

Die Aufgabe bestand in der Bereitstellung eines robusten Bindemittels und eines Verfahrens zur Verfestigung von geologischen Formationen mit diesem Bindemittel, bei dem die Gelbildungszeit des Bindemittels nicht durch Art und Konzentration an zusätzlichen Additiven in dem Bindemittel, pH-Änderungen und insbesondere den Bedingungen in der geologischen Formation, wie Art und Konzentration der Minerale, der katalytisch aktiven Substanzen usw. unkontrolliert verändert, insbesondere nicht verkürzt wird.

Es wurde nun überraschenderweise gefunden, dass andere Radikalbilder, die keine Peroxidfunktionalität enthalten, nämlich Azo-Verbindungen, die Verkürzung der Gelbildungszeit nicht oder nur in sehr geringem Maße zeigen. Es hat sich gezeigt, dass die Verwendung derartiger Radikalstarter bei der Polymerisation der anorganisch-organischen Bindemittel in der Formation, der Eisengehalt kaum oder nur eine sehr geringe Rolle spielt, d.h. die Gel-Bildungszeit wird kaum beeinflusst bzw. geringfügig verlängert, wodurch das Einpumpen und Flushen des Bindemittels sichergestellt werden kann. Die Verwendung von Radikalstartern ohne Peroxidfunktionalität führt zu einer ausreichenden Konstanz der Gelbildungszeiten bei Kontakt mit verschiedenen Substanzen. Dieses System reagiert bei Zusatz von Metallionen, speziellen Sanden oder bei Kontakt mit coiled tubing nicht mit einer Verkürzung der Gelbildungszeiten, wie dies mit Peroxiden beobachtet wurde.

Dies war nicht vorauszusehen. Ohne sich an eine Theorie binden zu wollen, kann dieses Phänomen vielleicht dadurch erklärt werden, dass die oben genannten ionischen bzw. katalytisch aktiven Systeme, wie sie in der Erdölindustrie in Produktionsequipment und Formationen üblich sind, auf Peroxide über unbekannte Mechanismen einwirken, während Azo-Verbindungen dagegen mehr oder weniger unbeeinflusst sind. Auf Basis dieser überraschenden Tatsache kann ein Bindersystem, wie dem beschriebenen Nanoglue®-System, mit Azo-Verbindungen für die vorgesehene Anwendung zur Stabilisierung von Öl- und Gasquellen verwendet werden.

Die Erfindung betrifft somit die Verwendung eines Bindemittels, umfassend eine Mischung aus A) einem Heterokondensat, erhältlich durch Hydrolyse und Kondensation von mindestens einer hydrolysierbaren Siliciumverbindung, die ausgewählt ist aus einem Silan der allgemeinen Formel (III), RₙSiX₄₋ₙ (III), worin die Reste R hydrolytisch nicht abspaltbare Gruppen darstellen, die Reste X gleich oder verschieden sind und Alkoxy darstellen und n den Wert 1 hat, wobei R Alkyl darstellt, der eine polymerisierbare Gruppe ausgewählt aus Methacryloyl, und Methacryloyloxy, und eine zweiwertige Brückengruppe zur Anbindung an das Si, ausgewählt aus Alkylen-Brückengruppen, umfasst, und mindestens einer Metallverbindung, wobei das Metall ausgewählt ist aus Ti, B) mindestens einem organischen polymerisierbaren Monomer oder Oligomer, das mindestens eine C-C-Doppelbindung aufweist, die eine olefinische polymerisierbare Gruppe ausgewählt aus Methacryloyl oder Methacryloyloxy ist, und C) mindestens einem thermischen Polymerisationsinitiator ohne Peroxidfunktionalität, wobei der Polymerisationsinitiator eine Azoverbindung darstellt, zur Stabilisierung der Bindemittel-Gelbildungszeit bei der Verfestigung einer geologischen Formation in Anwesenheit einer oder mehrerer katalytisch aktiven Substanzen, wobei es sich bei der katalytisch aktiven Substanz um Übergangsmetallionen ausgewählt aus Eisenionen handelt.

Die Gelbildungszeit ist die Zeit, die benötigt wird, damit das flüssige oder viskose Bindemittel geliert. Dieser Zeitpunkt ist wichtig, da ein Transport des Bindemittels nach der Gelierung nicht mehr möglich ist. Eine frühzeitige Gelierung kann daher zum Verstopfen der Leitungen führen oder überschüssiges Bindemittel kann nicht mehr ausgetrieben werden, so dass die gewünschte Porosität nicht erreicht werden kann. Die Gelierung wird durch Polymerisationen im Bindemittel bewirkt, die wiederum durch thermische Polymerisationsinitiatoren gestartet werden. Neben der Art und Konzentration des Bindemittels und des Polymerisationsinitiators und der Temperatur hängt die Gelierungszeit auch von anderen Faktoren wie zusätzlichen Additiven im Bindemittel, pH-Wert und Natur der geologischen Formation, insbesondere der darin enthaltenen katalytisch aktiven Spezies, ab. Wie vorstehend erläutert, können sich diese anderen Faktoren in einem natürlichen System wie geologischen Formation deutlich unterscheiden.

Durch Verwendung von thermischen Initiatoren, die keine Peroxidfunktion enthalten, kann die Gelbildungszeit des Bindemittels stabilisiert werden, d.h. die Gelbildungszeit ist unabhängiger von Änderungen in der Konzentration von zusätzlichen Additiven im Bindemittel, pH-Änderungen oder der Beschaffenheit der geologischen Formationen und des Produktionsequipments, insbesondere der darin enthaltenen katalytisch aktiven Substanzen. Die Stabilisierung bewirkt keine vollständige Unabhängigkeit von diesen Faktoren, der Einfluss ist aber deutlich geringer als bei anderen Bindemitteln, in denen Peroxide enthalten sind.

Polymerisation schließt hier sofern nicht näher spezifiziert allgemein neben der bevorzugt radikalischen Polymerisation, Polykondensation und Polyaddition ein. Im folgenden wird die Erfindung beschrieben.

Bei der zu verfestigenden geologischen Formation kann es sich um irgendeine Formation der Erdkruste handeln. Die Formation kann unterschiedliche Substrate enthalten, z.B. Gesteinsschichten verschiedener Mineralität, Erdreich, Sand, Tone, Erze, Kohle oder Mischungen davon. Die geologische Formation kann sich auch unter dem Meer oder unter einem See befinden. Sie kann auch künstliche Formationen wie Müllhalden umfassen. Die Verfestigung kann z.B. notwendig sein, weil die Formation lose oder lockere Bereiche umfasst oder daraus besteht, z.B. Sand oder anderes ungebundenes Material wie Gestein. Die Verfestigung kann zweckdienlich sein, um Bohrungen durchzuführen oder gasförmige oder flüssige Medien durch die Formation zu leiten.

Vorzugsweise enthält die Formation oder eine darunterliegende Formation Erdöl oder Erdgas. Solche Formationen bzw. Lagerstätten sind dem Fachmann bekannt. Es handelt sich bevorzugt um öl-, gas- oder wasserführende geologische Formationen. Häufig sind es sandhaltige Formationen.

Bei den katalytisch aktiven Substanzen, die in solchen geologischen Formationen vorhanden sein können, handelt es sich um Übergangsmetallionen ausgewählt aus Eisenionen. Metallionen in hydratisierter Form oder als Hydroxide können als Säuren oder Basen wirken.

In einer Ausführungsform ist ein Stahlrohr in die geologische Formation eingebracht. Das Bindemittel kann durch das Stahlrohr in die Formation geleitet werden. Wie ausgeführt werden Rohre aus weichem Stahl, die zu Coils aufgerollt werden, verwendet, um notwendige Chemikalien in die Formation einzuleiten. In der Regel sind die Coils innen von einer Rostschicht umgeben. Die hohe katalytische Aktivität solcher Eisenoxide ist bekannt. Nichtsdestotrotz können mit dem Bindemittel der Erfindung auch in Anwesenheit solcher Coils stabile Gelbildungszeiten erreicht werden.

Das Bindemittel wird zur Festigung der geologischen Formation in die Formation infiltriert. Dem Fachmann sind dafür geeignete Techniken vertraut. Die Infiltration kann z.B. durch Einpumpen des Bindemittels in die Formation erfolgen. Der Fachmann kann den geeigneten Druck und die für den jeweiligen Zweck notwendige Menge ohne weiteres bestimmen. Der Druck hängt z.B. von der eingestellten Viskosität des Bindemittels und natürlich insbesondere von der Beschaffenheit der Formation ab. Hierfür geeignete Hochdruckpumpen oder Injektionspumpen sind kommerziell erhältlich. Das Bindemittel kann auch z.B. über bereits vorhandene Bohrungen in die Formation infiltriert werden. Das Bindemittel kann an einer oder an mehreren Stellen in die geologische Formation infiltriert werden.

Die Infiltration des Bindemittels in die Formation führt zu einer Ausfüllung von darin befindlichen Zwischenräumen oder Kanälen, wodurch sich eine mehr oder weniger starke Abdichtung ergibt. Wenn man das einmal infiltrierte Bindemittel danach direkt aushärten lässt, erhält man zwar die gewünschte Festigkeit, allerdings kann dies auch zu einem teilweisen oder vollständigen Verlust der Permeabilität der Formation führen. Dies würde die Produktion von Erdöl oder Erdgas erschweren oder sogar unmöglich machen.

Es ist daher bevorzugt, nach der Infiltration des Bindemittels und vor dessen Härtung die geologische Formation mit einem Gas oder einer Flüssigkeit zu spülen, um einen Teil des infiltrierten Bindemittels wieder aus der Formation auszutreiben. Auf diese Weise bleibt in der Regel ein großer Teil der ursprünglichen Permeabilität oder Porosität der Formation erhalten. Das Spülen (Flushing) von geologischen Formationen mit gasförmigen oder flüssigen Medien ist bekannt.

Bei dem zum Spülen des erfindungsgemäßen Bindemittels eingesetzten Gas kann es sich z.B. um Stickstoff, CO₂ oder Luft handeln. Zum Spülen wird vorzugsweise eine Flüssigkeit eingesetzt. Bei der zum Spülen des infiltrierten Bindemittels eingesetzten Flüssigkeit handelt es sich um wasser- oder ölbasierte Lösungen. Die Flüssigkeit kann Additive enthalten, z.B. Tenside, Emulgatoren, Katalysatoren, Gas freisetzende Komponenten und/oder gelöste Stoffe wie Salze.

Das Spülgas und die Spülflüssigkeit können auf dieselbe Weise wie das Bindemittel in die geologische Formation eingedrückt werden, z.B. durch Hochdruckpumpen oder Injektionspumpen, um die Spülung zu erreichen. Dabei können dieselben Pumpen verwendet werden, die auch für die Infiltration des Bindemittels eingesetzt wurden, wobei die Pumpen gegebenenfalls vorher zu reinigen sind. Das Spülmedium kann auch über eine bereits vorhandene Bohrung eingeführt werden. Das Spülmedium kann an einer oder mehreren Stellen in die Formation eingedrückt werden. Diese Stellen können mit denen, in denen das Bindemittel infiltriert wurde, übereinstimmen oder nicht.

Das Spülen erfolgt insbesondere vor dem Härten des Bindemittels über einen bestimmten Zeitraum. Wenn das Spülen mit der Flüssigkeit erfolgt, ist es bevorzugt, dass das Bindemittel eine hydrolysierbare Siliciumverbindung, die einen nicht hydrolysierbaren organischen Rest mit mindestens einer hydrophilen Gruppe umfasst, umfasst. Dadurch kann eine erhöhte Festigkeit erzielt werden. Der optionale Einsatz und die Funktionsweise des hydrophilen Silans werden weiter unter diskutiert.

Parameter für das Spülen, wie Dauer, Zeitpunkt, Menge oder Durchflussgeschwindigkeit der gasförmigen oder flüssigen Phase, können vom Fachmann ohne weiteres in geeigneter Weise gewählt werden, um die gewünschte Porosität einzustellen. Durch Durchpumpen des gasförmigen oder flüssigen Mediums werden Porenvolumina in der Formation freigespült. Es können auch Reaktionsprodukte aus dem Bindemittel abgeführt werden.

Durch die Spülung wird der Teil des infiltrierten Bindemittels, der sich in den Poren oder Kanälen befindet, wieder ausgetrieben. Die Menge des ausgetriebenen Bindemittels kann durch die oben genannten Parameter und gegebenenfalls durch Einstellung des Bindemittels, z.B. bezüglich Viskosität oder Zusammensetzung, gesteuert werden.

Die Menge des auszutreibenden Bindemittels kann je nach vorliegender Formation, verwendetem Bindemittel und gewünschter Permeabilität variieren. Im allgemeinen sollten nach der Spülung mindestens 1, bevorzugt mindestens 5 und besonders bevorzugt mindestens 15 Gew.-% an Feststoff aus dem infiltrierten Bindemittels nach der Spülung in der Formation verbleiben. Entsprechend ist es bevorzugt, wenn mindestens 40, bevorzugt mindestens 60 und besonders bevorzugt mindestens 70 Gew.-% des infiltrierten Bindemittels durch die Spülung wieder aus der Formation ausgetrieben werden. Geeignete Mengen an in der Formation verbleibendem Bindemittel sind z.B. 5 bis 45 Gew.-% oder 10 bis 40 Gew.-% des infiltrierten Bindemittels.

Die Härtung des Bindemittels erfolgt nach der Infiltration und, falls durchgeführt, nach dem Spülen mit Gas oder Flüssigkeit. Für die Härtung sind in dem Bindemittel eine oder mehrere thermische Polymerisationsinitiatoren ohne Peroxidfunktionalität bzw. Radikalstarter enthalten, um die Polymerisation der im Bindemittel enthaltenen polymerisierbaren Gruppen, nämlich organischen Doppelbindungen, zu starten. Die Starttemperatur der Initiatoren ist dabei so eingestellt, dass sie bei der Temperatur der Formation aktiv werden. Zusätzlich härtet das Bindemittel durch die Kondensation der bei der Herstellung des Bindemittels synthetisierten vernetzbaren SiOH-Gruppen oder Metall-OH-Gruppen, die eine weitere Vernetzung unter Bildung eines anorganischen Netzwerkes bewirken.

Das Bindemittel eignet sich auch insbesondere für den Einsatz bei geologischen Formationen, die Wasser führen. In relativ großen Tiefen können hydrothermale Bedingungen vorliegen, d.h. eine erhöhte Temperatur und erhöhter Druck. Bei gewöhnlichen Bindemitteln ist unter solchen Bedingungen insbesondere die Langzeit-Beständigkeit sehr kritisch. Ein besonderer Vorteil des erfindungsgemäßen Bindemittels besteht darin, dass es auch unter solchen Hydrothermalbedingungen angewendet werden kann.

Die Abbindung (Härtung) erfolgt für solche Anwendungen bevorzugt unter erhöhter Temperatur und erhöhtem Druck oder Normaldruck, bezogen auf die Normalbedingungen, d.h. der Druck ist gleich oder größer als 1 bar und die Temperatur ist höher als 20°C. Das Bindemittel kann entsprechend den geologischen Rahmenbedingungen der Formation, in der es eingesetzt wird, in der Regel Temperaturen von über 25°C oder über 30°C und/oder Drücken von 1 bar oder mehr, z.B. mehr als 1,2 bar oder 2 bar oder sogar mehr als 40 bar gehärtet werden.

Die Härtung kann in Abhängigkeit von den chemischen Eigenschaften der organischen und anorganischen Bestandteile des Bindemittels über anorganische Kondensations- und über Polymerisationsreaktionen der eingesetzten organischen polymerisierbaren Monomere oder Oligomere verfestigt werden, wobei vor, nach oder parallel zu der Polymerisation der organischen Monomere oder Oligomere eine weitere Kondensation der anorganischen Bestandteile des Bindemittels stattfindet, die ebenfalls zur Härtung beiträgt.

Mit dem Verfahren können geologischen Formationen bei stabilisierter Gelbildungszeit verfestigt werden, insbesondere geologische Formationen für die Ölund Gasförderung. Es ermöglicht die Aufrechterhaltung von Porosität und Permeabilität, wodurch die Ausbeutung von Öl- und Gasquellen wesentlich erleichtert werden kann.

Im Folgenden werden das Bindemittel und seine Herstellung erläutert. Das nachstehend erläuterte Bindemittel kann im Verfahren und für die erfindungsgemäße Verwendung eingesetzt werden. Bei dem Bindemittel handelt es sich insbesondere um ein öl-, heißwasser- und temperaturbeständiges Bindemittel.

Das Bindemittel umfasst ein Heterokondensat, das durch Hydrolyse und Kondensation von mindestens einer hydrolysierbaren Siliciumverbindung und mindestens einer Metallverbindung erhältlich ist. Es können ein, zwei oder mehr hydrolysierbare Siliciumverbindungen und/oder ein, zwei oder mehr Metallverbindungen eingesetzt werden. Die mindestens eine hydrolysierbare Siliciumverbindung ist ausgewählt aus einer oder mehreren hydrolysierbaren Siliciumverbindungen mit mindestens einem nicht hydrolysierbaren organischen Rest, wobei der organische Rest ein organischer Rest mit polymerisierbarer Gruppen ist, nämlich ein Silan der allgemeinen Formel (III) wie nachstehend definiert.

Zusätzlich kann mindestens eine hydrolysierbare Siliciumverbindung ohne nicht hydrolysierbare Gruppen eingesetzt werden. Beispiele für einsetzbare hydrolysierbare Siliciumverbindungen ohne nicht hydrolysierbare Gruppen sind Siliciumverbindungen der allgemeinen Formel

SiX₄ (I)

worin die Reste X gleich oder verschieden sind und hydrolytisch abspaltbare Gruppen oder Hydroxygruppen darstellen.

Geeignete Beispiele für hydrolytisch abspaltbare bzw. hydrolysierbare Gruppen X sind Wasserstoff, Halogen (F, Cl, Br oder I, insbesondere Cl oder Br), Alkoxy (z. B. C₁₋₆-Alkoxy, wie z. B. Methoxy, Ethoxy, n-Propoxy, i-Propoxy und n-, i-, sek.- oder tert.-Butoxy), Isocyanato, Aryloxy (vorzugsweise C₆₋₁₀-Aryloxy, wie z. B. Phenoxy), Alkaryloxy, z.B. Benzoyloxy, Acyloxy (z. B. C₁₋₆-Acyloxy, vorzugsweise C₁₋₄-Acyloxy, wie z. B. Acetoxy oder Propionyloxy) und Alkylcarbonyl (z. B. C₂₋₇-Alkylcarbonyl wie Acetyl). Ebenfalls geeignet sind NH₂, mit Alkyl, Aryl und/oder Aralkyl mono- oder disubstituiertes Amino, wobei Beispiele für die Alkyl-, Aryl und/oder Aralkylreste die nachstehend für R angegebenen sind, Amido wie Benzamido oder Aldoxim- oder Ketoximgruppen. Zwei oder drei Gruppen X können auch miteinander verbunden sein, z. B. bei Si-Polyolkomplexen mit Glycol, Glycerin oder Brenzcatechin. Die genannten Gruppen können gegebenenfalls Substituenten, wie Halogen, Hydroxy oder Alkoxy enthalten.

Bevorzugte hydrolysierbare Reste X sind Halogen, Alkoxygruppen und Acyloxygruppen. Besonders bevorzugte hydrolysierbare Reste sind Alkoxygruppen, bevorzugter C₁₋₄-Alkoxygruppen, insbesondere Methoxy und Ethoxy.

Konkrete Beispiele für hydrolysierbare Siliciumverbindungen der Formel SiX₄ sind Si(OCH₃)₄, Si(OC₂H₅)₄, Si(OC₃H₇)₄, SiCl₄, HSiCl₃, Si(OOCCH₃)₄. Von diesen hydrolysierbaren Silanen ist Tetraethoxysilan (TEOS) besonders bevorzugt.

Als weitere Komponente für das Heterokondensat wird eine zusätzliche Verbindung, insbesondere eine hydrolysierbare Verbindung, von einem Metall ausgewählt aus Ti eingesetzt. Durch diese Komponente wird die Korrosionsresistenz und Hydrolysebeständigkeit des gehärteten Bindemittels erhöht. Die Verbindungen können einzeln oder als Mischung aus zwei oder mehr dieser Elemente eingesetzt werden.

Bei der Metallverbindung kann es sich um eine Verbindung der Formel (II) handeln

MXₐ (II)

worin M Ti ist, X gleich oder verschieden ist und hydrolytisch abspaltbare Gruppen oder Hydroxygruppen darstellt und a der Wertigkeit des Elements entspricht, wobei bei Einsatz von Komplexliganden a auch größer oder bei mehrzähnigen Liganden auch kleiner als die Wertigkeit von M sein kann, oder um entsprechende lösliche Oxide oder Hydroxide. Die Wertigkeit von M ist in der Regel 1, 2, 3, 4 oder 5. Gegebenfalls umfasst die Verbindung der Formel (II) auch ein Gegenion. Beispiele für X sind wie vorstehend für Formel (I) definiert, einschließlich der bevorzugten Beispiele, wobei zwei Gruppen X durch eine Oxogruppe ersetzt sein können. X kann neben den in Formel (I) angegeben Substituenten auch Sulfat, Nitrat, ein Komplexbildner, wie z.B. ein ß-Diketon, eine gesättigte oder ungesättigte Carbonsäure oder das Salz davon, eine anorganische Säure oder ein Salz davon und ein Aminoalkohol sein. Die Metallverbindung ist insbesondere eine hydrolysierbare Verbindung.

In einer bevorzugten Ausführungsform werden Metallverbindungen, die Komplexliganden umfassen, oder eine Kombination von Metallverbindungen und einem Komplexliganden, eingesetzt. Ohne sich an eine Theorie binden zu wollen, wird angenommen, dass bei Einsatz einer Kombination von Metallverbindungen und einem Komplexliganden zur Herstellung des Hydrolysats und Kondensats sich in situ eine Anbindung des Komplexliganden an das Zentralatom der eingesetzten Metallverbindung ergeben kann. Geeignete Kombinationen kann der Fachmann ohne weiteres auswählen. Die Kombination kann z.B. durch einfaches Mischen der beiden Komponenten erhalten werden. Beispiele für Komplexliganden sind Acetylacetonat, Ethylacetoacetat, Dialkyldithiophosphat, Dodecylbenzolsulfonsäure, Ölsäure und Palmitinsäure.

In einer Ausführungsform kann der Komplexligand einen polymerisierbaren Rest umfassen. Die polymerisierbare organische Gruppe kann jede übliche, dem Fachmann bekannte Gruppe sein, die mit sich selbst oder einer oder mehreren anderen korrespondierenden polymerisierbaren Gruppen eine Polymerisation eingehen kann.

Als Metallverbindungen sind die Alkoxide von Ti bevorzugt. Geeignete Metallverbindungen einschließlich solcher mit Komplexbildner sind z.B. Ti(OC₂H₅)₄ (TET), Ti(O-n- oder i-C₃H₇)₄, Ti(OC₄H₉)₄, TiCl₄, Ti(O-iC₃H₇)₂Cl₂, Hexafluorotitansäure, TiOSO₄, Diisopropoxybis(ethylacetoacetato)titanat, Poly(dibutyltitanat), Tetrakis-(diethylamino)titan, Titan-2-ethylhexoxid, Titanbis(triethanolamin)diisopropoxid, Titan-chloridtriisopropoxid, Titanacetylacetonat, Titanoxidbis(pentandionat), Ti(OC₃H₇)₃(OOC(CH₃)=CH₂) und Ti(OC₂H₄)₃(Allylacetoacetat). Von den Metallverbindungen sind Ti(O-iC₃H₇)₄, Ti(OC₄H₉)₄, Titanbis(triethanolamin)diisopropoxid und Ti(OC₃H₇)₃(OOC(CH₃)=CH₂) und weitere Komplexbildner umfassende Ti-Verbindungen besonders bevorzugt. Wie gesagt kann alternativ eine Kombination von der Metallverbindung mit dem gewünschten Komplexbildner eingesetzt werden.

Es werden eine oder mehrere hydrolysierbare Siliciumverbindungen mit mindestens einer nicht hydrolysierbaren organischen Gruppe zur Bildung des Heterokondensats eingesetzt. Es handelt sich um Verbindungen bzw. Silane der allgemeinen Formel (III)

RₙSiX₄₋ₙ (III)

worin die Reste R hydrolytisch nicht abspaltbare Gruppen darstellen, die Reste X gleich oder verschieden sind und Alkoxy darstellen und n den Wert 1 hat.

Der hydrolytisch nicht abspaltbare Rest R ist Alkyl, z. B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl, der eine polymerisierbare Gruppe und eine zweiwertige Brückengruppe zur Anbindung an das Si umfasst.

Die polymerisierbare Gruppe ist Methacryloyl oder Methacryloyloxy. Die polymerisierbare Gruppe ist über zweiwertige Brückengruppen ausgewählt aus Alkylen-Brückengruppen an das Siliciumatom gebunden. Die Brückengruppen enthalten z. B. 1 bis 6 Kohlenstoffatome. Die genannten zweiwertigen Brückengruppen leiten sich z.B. von den oben genannten einwertigen Alkylresten ab. Bevorzugt ist die Brückengruppe eine Propylengruppe.

Konkrete Beispiele sind (Meth)acryloyloxyalkyltrimethoxysilan und (Meth)acryloyloxyalkyltriethoxysilan, z.B. Methacryloyloxypropyltrimethoxysilan (MPTS).

In einer Ausführungsform kann mindestens eine Siliciumverbindung mit mindestens einer nicht hydrolysierbaren Gruppe der Formel (III) in Kombination mit mindestens einer hydrolysierbaren Siliciumverbindung der Formel (I) als Si-Komponente des Heterokondensats eingesetzt werden.

Die hydrolysierbaren Siliciumverbindungen werden auch als Silane bezeichnet. Silane und nachstehend beschriebene Polysiloxane lassen sich nach bekannten Methoden herstellen; vgl. W. Noll, "Chemie und Technologie der Silicone", Verlag Chemie GmbH, Weinheim/Bergstraße (1968).

Das Molverhältnis von Si-Atomen aller eingesetzten Si-Verbindungen zu den Metallatomen aller eingesetzten vorstehend genannter Metallverbindungen im Heterokondensat kann in breiten Bereichen gewählt werden, beträgt aber bevorzugt 10:1 bis 1:3 und bevorzugter 5:1 bis 1:1.

Zur Herstellung des Heterokondensats wird die mindestens eine Siliciumverbindung und die mindestens eine Metallverbindung, durch Vermischung mit Wasser einer Hydrolyse unterworfen, wobei die Reaktion bevorzugt nach dem nachstehend diskutierten CCC-Verfahren durchgeführt wird, um ein homogenes Heterokondensat aus Si-Komponenten und Metallkomponenten zu erhalten. Die Hydrolyse erfolgt insbesondere nach dem Sol-Gel-Verfahren. Beim Sol-Gel-Verfahren werden allgemein die hydrolysierbaren Verbindungen mit Wasser, gegebenenfalls in Gegenwart von sauren oder basischen Katalysatoren, hydrolysiert. Vorzugsweise erfolgt die Hydrolyse in Gegenwart saurer Katalysatoren, z. B. Salzsäure oder Phosphorsäure, vorzugsweise bei einem pH-Wert von 1 bis 3. Das sich bildende Sol kann durch geeignete Parameter, z. B. Kondensationsgrad, Lösungsmittel oder pH-Wert, auf die für das Bindemittel gewünschte Viskosität eingestellt werden. Sol-Gel-Prozesse sind seit langem bekannt. Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Für die Hydrolyse können stöchiometrische Wassermengen, aber auch geringere oder größere Mengen verwendet werden, z.B. bis zu 1,2 Mol Wasser pro Mol der vorhandenen hydrolysierbaren Gruppen. Vorzugsweise wird eine unterstöchiometrische Wassermenge, bezogen auf die vorhandenen hydrolysierbaren Gruppen, angewandt. Die zur Hydrolyse und Kondensation der hydrolysierbaren Verbindungen eingesetzte Wassermenge beträgt vorzugsweise 0,1 bis 0,9 Mol, und besonders bevorzugt 0,25 bis 0,75 Mol Wasser pro Mol der vorhandenen hydrolysierbaren Gruppen. Oft werden besonders gute Ergebnisse mit weniger als 0,7 Mol Wasser, insbesondere 0,45 bis 0,65 Mol Wasser, pro Mol der vorhandenen hydrolysierbaren Gruppen erzielt. Als vorhandene hydrolysierbare Gruppen werden hier alle hydrolysierbaren Gruppen der insgesamt zugegebenen Ausgangsverbindungen verstanden, also einschließlich der gegebenenfalls erst später zugegebenen Metallverbindungen.

Hydrolysierbare Siliciumverbindungen und Metallverbindungen weisen im Hinblick auf Hydrolyse und Kondensation unterschiedliche Reaktivitäten auf. Ferner sind die Hydrolyseprodukte recht instabil, so dass sich nach erfolgter Hydrolyse Kondensationsreaktionen anschließen. Werden z.B. hydrolysierbare Siliciumverbindungen und Titanverbindungen gleichzeitig hydrolysiert, so werden separate TiO₂-Partikel gebildet, so dass ein Großteil des Ti nicht molekular in das Netzwerk des sich bildenden Kondensats eingebaut wird.

In einer bevorzugten Ausführungsform erfolgt die Hydrolyse daher in zwei oder mehr Stufen nach dem sogenannten chemisch gesteuerten Kondensationsverfahren (CCC-Verfahren, chemically controlled condensation process). Hierbei wird berücksichtigt, dass die eingesetzten hydrolysierbaren Verbindungen unterschiedliche Hydrolysereaktivitäten aufweisen. Wie vorstehend ausgeführt besitzen insbesondere die Metallverbindungen in der Regel eine höhere Hydrolysereaktivität als hydrolysierbare Silane.

Nach dem bevorzugten zwei- oder mehrstufigen Hydrolyseverfahren werden zuerst eine oder mehrere hydrolysierbare Verbindungen mit niedrigerer Hydrolysereaktivität mit im allgemeinen der Menge an Wasser, die für die Bildung des Hydrolysats oder Kondensats vorgesehen ist, gemischt, um diese Verbindungen vorzuhydrolysieren, und dann werden zu dieser Mischungen eine oder mehrere hydrolysierbare Verbindungen mit höherer Hydrolysereaktivität zugesetzt. Dies kann bei Bedarf noch weiter ausdifferenziert werden, indem drei oder mehr Stufen ausführt werden.

Bei der Herstellung des Heterokondensats in zwei oder mehr Stufen erfolgt zunächst eine Hydrolyse der Silane durch Mischung von hydrolysierbaren Silanen und Wasser, gegebenenfalls in Anwesenheit eines Katalysators. Durch die Hydrolyse wird das zugegebene freie Wasser verbraucht. Die hydrolysierten Silane können anschließend Kondensationsreaktionen eingehen, bei denen wieder Wasser freigesetzt wird. Auch wenn Kondensationsreaktionen gegebenenfalls schon einsetzen können, bevor die Silane vollständig hydrolysiert worden sind, sinkt der Gehalt an freiem Wasser in der Mischung nach Zugabe des Wassers mit der Zeit auf ein Minimum und steigt dann aufgrund von Kondensationsreaktionen wieder an. Da, bezogen auf die hydrolysierbaren Gruppen der hydrolysierbaren Silane, bevorzugt höchstens eine stöchiometrische Menge und bevorzugter eine unterstöchiometrische Menge Wasser zugesetzt wird, wird das eingesetzte Wasser zunächst vollständig oder im Wesentlichen vollständig verbraucht, ehe durch die Kondensation wieder Wasser freigesetzt wird, d.h. im Minimum ist praktisch kein Wasser oder nur wenig Wasser in der Mischung vorhanden.

Die Metallverbindung wird bevorzugt zu der Mischung aus der hydrolysierbaren Siliciumverbindung und Wasser gegeben, wenn das Wasser in der Reaktionsmischung durch die Hydrolyse im Wesentlichen verbraucht worden ist, d.h. zum Zeitpunkt der Zugabe der Metallverbindung ist in der Reaktionsmischung kein Wasser oder nur eine geringe Menge Wasser vorhanden, bevorzugt weniger als 15%, bevorzugter weniger als 10% und besonders bevorzugt weniger als 5% der Wassermenge, die zur Hydrolyse zugesetzt wurde. Die Metallverbindung wird auch insbesondere zugegeben, bevor durch die Kondensationsreaktionen sich wieder ein höherer Gehalt an freiem Wasser in der Reaktionsmischung bildet.

Dem Fachmann sind die Verfahren zur Bestimmung des Wassergehalts in einer Mischung vertraut. Beispiele für geeignete Verfahren sind die Karl-Fischer-Titration oder IR-Spektroskopie. Die geeignete Zeitspanne zur Zugabe der Metall- oder Borverbindung kann auch einfach empirisch z.B. im Rahmen von Vorversuchen bestimmt werden, bei denen die Metallverbindung zu bestimmten Zeitpunkten zur Mischung hydrolysierbare Siliciumverbindung/Wasser zugegeben wird und anschließend z.B. durch Photonenkorrelationsspektroskopie (PCS) oder Dynamische Lichtstreuung geprüft wird, ob sich Partikel bilden, bei denen es sich um die Oxide der Metallverbindung handelt, etwa TiO₂-Teilchen. Sofern sich solche Partikel bilden, ist die Zugabe zu früh oder zu spät erfolgt. Die geeignete Zeitspanne zur Zugabe, in der diese Teilchen nicht gebildet werden, kann auf diese Weise leicht bestimmt werden.

Eine andere, leicht durchführbare Methode zur Feststellung des Zugabezeitpunkts ist die Ermittlung des Klarpunkts. Vor dem Einsetzen der Hydrolyse ist die Silanphase mit Wasser nicht mischbar. Bei Zugabe von Wasser wird dies durch eine Trübung der gerührten Reaktionsmischung angezeigt. Erst durch die Bildung von Alkohol und ≡SiOH bei gleichzeitigem Verbrauch von Wasser wird das System einphasig und zeigt den weitgehenden Verbrauch von H₂O an. Am Klarpunkt gehen diese beiden Phasen ineinander über und die Reaktionsmischung klart sich auf. Da der Klarpunkt in der Regel ungefähr dann auftritt, wenn das zugesetzte Wasser im Wesentlichen verbraucht worden ist bzw. der Wassergehalt minimal ist, kann die Metallverbindung zugegeben werden, wenn der Klarpunkt erreicht worden ist. Dies schließt eine Zugabe kurz vor oder nach dem Klarpunkt natürlich ein.

Das erhaltene Heterokondensat kann wie es ist verwendet werden. Es kann durch geeignete Parameter, z. B. Kondensationsgrad, Lösungsmittel oder pH-Wert, auf die für das Bindemittel gewünschte Viskosität eingestellt werden. In einer bevorzugten Ausführungsform lässt man das Bindemittel durch einfaches Stehenlassen reifen bzw. altern, z.B. für mindestens 1 h und bevorzugt mindestens 5 h. Danach kann es für die gedachte Anwendung für das Bindemittel eingesetzt werden.

Es wurde auch überraschenderweise festgestellt, dass ein noch homogeneres Heterokondensat erhalten werden kann, wenn die Ausgangsmaterialien unverdünnt, d.h. ohne Lösungsmittel, eingesetzt werden. Die Hydrolyse und Kondensation werden daher bevorzugt ohne Zugabe von Lösungsmittel durchgeführt. Es ist dabei zu berücksichtigen, dass sich bei den Hydrolysereaktionen der Ausgangsmaterialien wie den Alkoholaten Lösungsmittel in situ bilden kann. Das Reaktionsgemisch ist daher beim Fortschritt der Hydrolyse in der Regel nicht lösungsmittelfrei, aber wesentlich weniger verdünnt als es sonst nach dem Stand der Technik üblich ist. Nach Vervollständigung der Reaktion, z.B. nach der obigen Reifung kann Lösungsmittel zugegeben werden, z.B. zur Einstellung der Viskosität.

Das Heterokondensat umfasst dementsprechend ein Metallosiloxan, das Heteroatomeinheiten von Heteroatomen ausgewählt aus Ti, die über Sauerstoffbrücken in das Siloxangerüst eingebaut sind, und Siloxaneinheiten, bei denen das Siliciumatom gegebenenfalls eine nicht hydrolysierbare organische Gruppe aufweist, enthält. Das Heteroatom ist je nach Wertigkeit über 2, 3 oder 4 Sauerstoffbrücken in das Siloxangerüst eingebaut. Als Heteroatom wird Ti eingesetzt, so dass Titanosiloxane gebildet werden. Zumindest ein Teil der Si-Atome oder alle Si-Atome des Siloxangerüsts weisen eine nicht hydrolysierbare organische Gruppe auf, die eine polymerisierbare Gruppe umfasst.

Das Bindemittel umfasst ferner eine rein organische Komponente B), so dass eine zusätzliche organische Matrix aufgebaut werden kann. Die organische Komponente aus den nachstehend definierten Monomeren oder Oligomeren ist bevorzugt löslich. Durch den Einsatz der organischen Komponente werden weiter verbesserte mechanische Festigkeit und Flexibilität erzielt. Es ergeben sich nach dem Härten zwei sich durchdringende Polymere, nämlich das Heterokondensat und ein rein organisches Polymer, so dass sich IPN-Polymere (IPN = Interpenetrierende Netzwerke, siehe z.B. Römpp Chemie Lexikon, 9. Auflage, S. 2007) bilden. Die sich durchdringenden Polymere können rein physikalisch gemischt sein.

Für die organische Bindemittelkomponente B) werden ein oder mehrere organische polymerisierbare Monomere oder Oligomere verwendet, die mindestens eine C-C-Doppelbindung aufweisen. Bei der olefinischen Gruppe handelt sich insbesondere um eine radikalisch polymerisierbare Gruppe. Bevorzugt sind thermisch polymerisierbare Gruppen. Es kann auch ein Gemisch aus zwei oder mehr Monomeren oder Oligomeren verwendet werden. Die olefinische polymerisierbare Gruppen ist ausgewählt aus Methacryloyl und Methacryloyloxy.

Das organische Monomer oder Oligomer umfasst eine und bevorzugt mindestens zwei polymerisierbare Gruppen. Bevorzugt sind somit organische Monomere oder Oligomere mit mindestens zwei C-C-Doppelbindungen, insbesondere Dimethacrylate. Organische Monomere oder Oligomere als Bindemittelkomponente sind dem Fachmann bestens vertraut und er kann sie ohne weiteres in geeigneter Weise je nach Bedarf auswählen. Bei der eingesetzten organischen Komponente kann es sich um definierte Einzelverbindungen oder Gemische von Verbindungen mit unterschiedlichem Polymerisationsgrad handeln.

Mono-, bi- oder polyfunktionelle Methacrylate werden als Monomere oder Oligomere eingesetzt. Konkrete Beispiele für das organische Monomer oder Oligomer sind Diethylenglycoldimethacrylat (DEGDMA), Triethylenglycoldimethacrylat (TEGDMA), Bisphenol A-glycidylmethacrylat (BisGMA), Diurethandimethacrylat, Urethandimethacrylat (UDMA), Trimethylolpropantrimethacrylat, Neopentylglycoldimethacrylat, oligomere Methacrylate, wie LR 8862, LR 8907 von BASF, sowie Oligomere der genannten Monomere.

Zum Bindemittel wird als thermischer Polymerisationsinitiator ohne Peroxidfunktionalität eine Azoverbindung als thermischer Initiator oder Starter für die Polymerisation zugegeben, der insbesondere ein radikalischer Initiator ist. Der Inititiator startet die Polymerisation, wodurch das Bindemittel gehärtet bzw. vernetzt wird. Ohne Peroxidfunktionalität bzw. ohne Peroxidfunktion bedeutet hierbei einen thermischen Polymerisationsinitiator ohne Peroxidgruppe. Azo-Verbindungen sind als Radikalbildner seit langem bekannt und werden in der Polymerisationschemie häufig verwendet. Sie sind im Handel erhältlich. Der Fachmann kann Geeignete unter Berücksichtigung der eingesetzten Komponenten leicht auswählen.

Beispiele sind Azobisnitrile wie Azobisisobutyronitril (AIBN), 2,2'-Dimethyl-2,2'-azo-dipropiononitril (Vazo®64), 2,2'-Azobis(2-methylbutyronitril) (Vazo®67), 1,1'-Azo-bis-(cyclohexancarbonsäurenitril) (Vazo®88), 2,2'-Azobis(2,4-dimethylvaleronitril) (Vazo® 52) oder Azobiscarbonsäureester wie Dimethyl-2,2'-azo-bisisobutyrat, und Azobiscarbonsäureamide. Viele verschiedene Azostarter sind von DuPont in der Vazo®-Produktreihe erhältlich.

Der thermische Polymerisationsinitiator, d.h. die Azoverbindung, kann z.B. vor Beginn der Infiltration in das flüssige Bindemittel eingerührt werden. Der Initiator kann in den üblichen, dem Fachmann bekannten Mengen eingesetzt werden, z.B. 0,01 bis 5 Gew.-%, bezogen auf den Gesamtfeststoffgehalt des Bindemittels.

In einer bevorzugten Ausführungsform, insbesondere wenn ein Schritt des Austreibens eines Teils des infiltrierten Bindemittels mit einer Flüssigkeit durchgeführt wird, umfasst das Bindemittel als weitere Komponente mindestens eine hydrolysierbare Siliciumverbindung, die einen nicht hydrolysierbaren organischen Rest mit mindestens einer hydrophilen Gruppe umfasst. Es handelt sich um eine monomere hydrolysierbare Siliciumverbindung. Dabei handelt es sich um ein Silan der allgemeinen Formel (IIIa)

R'ₙSiX₄₋ₙ (IIIa)

worin die Reste R' hydrolytisch nicht abspaltbare Gruppen darstellen, wobei mindestens ein Rest R' Alkyl ist, der mindestens eine hydrophile Gruppe als Substituenten aufweist, die Reste X gleich oder verschieden sind und Alkoxy darstellen und n den Wert 1 hat.

Die hydrophile Gruppe des hydrolysierbaren Silans ist eine Aminogruppe. Solche Verbindungen sind auch im Handel erhältlich.

Die hydrophile Gruppe ist über zweiwertige Brückengruppen, nämlich Alkylen-Brückengruppen, an das Siliciumatom gebunden. Die Brückengruppen enthalten z. B. 1 bis 8, bevorzugt 1 bis 6 Kohlenstoffatome. Bevorzugt ist die Brückengruppe eine Propylengruppe. Bevorzugte Substituenten mit hydrophiler Gruppe sind Amino-(C₁₋₈)-alkylen. Besonders bevorzugte Reste sind Aminopropyl.

Beispiele für eine besonders bevorzugt eingesetzte hydrolysierbare Siliciumverbindungen, die einen nicht hydrolysierbaren organischen Rest mit mindestens einer hydrophilen Gruppe umfasst, sind Aminopropyltrialkoxysilane, einschließlich Mono-, Di- und Triaminopropyltrialkoxysilane. Konkrete Beispiele für die hydrolysierbare Siliciumverbindung sind 3-Aminopropyltrimethoxysilan (APTS), 3-Aminopropyltriethoxysilan (APTES), N-Hydroxyethylaminopropyltrialkoxysilan. Bei der Alkoxygruppe aller vorstehend genannten Verbindungen kann es sich um jede übliche handeln, am üblichsten sind Methoxy- oder Ethoxygruppen. Die Verbindungen sind im Handel erhältlich und/oder können nach dem Fachmann bekannten Verfahren hergestellt werden.

Durch die Zugabe von hydrophilen Silanen, die mindestens eine nicht hydrolysierbare Gruppe mit mindestens einer hydrophilen Gruppe aufweisen, zu dem Heterokondensat und dem polymerisierbaren Monomer oder Oligomer entsteht eine zusätzliche Phase oder emulgierte Phase, die klebrig ist, eine deutlich verbesserte Viskosität aufweist und die zu Gesteinsoberflächen eine außerordentlich hohe Haftung aufweist. Ohne sich an eine Theorie binden zu wollen, wird davon ausgegangen, dass diese Phase einen wesentlich höheren Verbleib von polymerisierbaren Bindemittelanteilen in der Formation verursachen kann, selbst wenn ein Flushing mit einer salzhaltigen wässrigen Flüssigkeit durchgeführt wird, so dass damit nach dem Aushärten die verbesserte Festigkeit, z.B. zwischen 5 und 10 MPa, erhalten wird.

Die Reihenfolge der Zugabe der einzelnen Komponenten ist beliebig. In einer bevorzugten Ausführungsform wird z.B. das Heterokondensat mit dem mindestens einen organischen Monomer oder Oligomer vermischt. Sofern verwendet, wird anschließend die mindestens eine hydrolysierbare Siliciumverbindung, die eine nicht hydrolysierbare Gruppe mit mindestens einer hydrophilen Gruppe umfasst, zugegeben. Weitere Additive wie nachstehend beschrieben können danach zugesetzt werden. Sie können aber auch ohne weiteres vorher zugegeben werden. Die Azoverbindung wird in der Regel zum Schluss kurz vor der Infiltration in die flüssige Bindemittellösung eingerührt.

Als zusätzliche Komponente kann das Bindemittel Polysiloxane, wie z.B. Poly-(alkoxysilane) oder Polyalkylsiloxane oder entsprechende Polyarylsiloxane und Copolymere davon, umfassen. Es können Polysiloxane eingesetzt werden, die keine reaktiven Gruppen tragen. Bevorzugt werden aber Polysiloxane eingesetzt, die mindestens eine reaktive Gruppe, insbesondere eine reaktive Endgruppe, aufweisen. Man kann dadurch IPN-Polymere mit kovalenten Bindungen zwischen den sich durchdringenden Polymeren erhalten. Es können aber auch IPN-Polymere gebildet werden, die rein physikalisch gemischt sind.

Es gibt eine große Vielfalt an Poly(alkoxysilanen), Polyalkylsiloxanen und Polyarylsilanen und Copolymeren davon mit reaktiven Endgruppen. Insbesondere sind solche Polysiloxane, insbesondere Polyalkylsiloxane, mit reaktiven Gruppen bzw. Endgruppen kommerziell erhältlich, z.B. von Gelest, Inc., Philadelphia. Beispiele für die reaktive Gruppe oder Endgruppe sind Vinyl, Hydrid, Silanol, Alkoxy, Amine, Epoxy, Carbinol, Methacrylat/Acrylat, Mercapto, Acetoxy, Chlorid und Dimethylamin. Über die reaktiven Gruppen bzw. Endgruppen können die Polysiloxane in das anorganische Netzwerk und gegebenenfalls in die organische Matrix eingebunden bzw. vernetzt werden. Wenn z.B. Polysiloxane mit Silanol-Endgruppen eingesetzt werden, wird die Silanol-Gruppe mit Hydroxygruppen der hydrolysierten Silane oder der Metall- oder Borverbindungen reagieren. Dadurch wird die Elastizität bzw. Druckfestigkeit überraschenderweise noch weiter erhöht.

Die Polysiloxane können verzweigt oder bevorzugt linear sein. Die reaktive Gruppe kann an der Hauptkette oder einer Seitenkette vorliegen, ist aber bevorzugt eine Endgruppe. Es können natürlich mehr als eine reaktive Gruppe vorhanden sein, z.B. 2 oder mehr reaktive Gruppen. Ein lineares Polysiloxan enthält z.B. bevorzugt 2 reaktive Endgruppen. Als Polysiloxane mit reaktiven Gruppen oder Endgruppen werden Polysiloxane mit Silanol- und Alkoxy-Gruppen bevorzugt eingesetzt, insbesondere Polysiloxane mit Silanol-Endgruppen.

Beispiele für Poly(alkoxysilane), Polyalkyl- bzw. Polyarylsiloxane und Copolymere davon sind Polydimethylsiloxane, Polydiethylsiloxane, Polymethylethylsiloxane, Polydiphenylsiloxane und entsprechende Copolymere, die jeweils mindestens eine reaktive Gruppe enthalten. Spezielle Beispiele sind Polydimethylsiloxane mit Silanol-Endgruppen oder mit Alkoxy-Endgruppen, Poly(diethoxysiloxane) und Polydimethoxysiloxane.

Das Molekulargewicht der verwendeten Polysiloxane kann je nach Anwendungsbereich aus einem großen Bereich ausgewählt werden, beispielsweise im Bereich von 100 bis 10.000 g/mol. Bevorzugt sind Polysiloxane mit einem Molekulargewicht von 100 bis 3500 g/mol und bevorzugter 300 bis 3000 g/mol, z.B. 400 bis 2000 g/mol. Es können auch höhermolekulare Polysiloxane eingesetzt werden, z.B. mit einem Molekulargewicht bis zu 50000 g/mol oder mehr. Unter dem Molekulargewicht wird hier das Zahlenmittel des Molekulargewichts verstanden.

Es können nichtreaktive Oligomere oder Polymere als zusätzliche organische Komponente zugegeben werden. Diese nichtreaktiven Oligomere und Polymere besitzen keine polymerisierbaren oder polykondensierbaren Gruppen und unterliegen demzufolge keiner Polymerisation und damit auch keinem Polymerisationsschrumpf.

Das Gewichtsverhältnis aller eingesetzten anorganischen Komponenten, einschließlich der darin enthaltenen organischen Gruppen, zu den eingesetzten rein organischen Komponenten kann in breiten Bereichen gewählt werden und beträgt, bezogen auf das gehärtete Bindemittel, z.B. 95:5 bis 5:95 und bevorzugt 80:20 bis 20:80. Sofern eine hydrolysierbare Siliciumverbindung, die einen nicht hydrolysierbaren Rest mit mindestens einer hydrophilen Gruppe umfasst, in der Bindemittelmischung eingesetzt wird, ist das Gewichtsverhältnis von Heterokondensat / organischem polymerisierbarem Monomer oder Oligomer / hydrolysierbarem Silan mit hydrophiler Gruppe z.B. geeigneterweise 5-94,5% / 5-94,5% / 0,5-10%, bevorzugt 29-70% / 29-70% / 1-5% und besonders bevorzugt 39-60% / 39-60% / 1-2%.

Das Bindemittel kann als weitere Komponente einen Puffer umfassen. Durch den Puffer kann der pH-Wert des Bindemittels auf einen gewünschten Wert eingestellt werden, zum anderen wird das Bindemittel stabilisiert, d.h. bei Verdünnungen des Bindemittels oder bei Säure- oder Basenzugaben zum Bindemittel in nicht zu großen Mengen ändert sich der pH-Wert des Bindemittels kaum. Durch die Zugabe des Puffers kann der pH-Wert des Bindemittels auf einen Wert im Bereich von 2 bis 7, bevorzugt 4 bis 6, bevorzugter 4,5 bis 6 oder 4 bis 5 eingestellt werden.

Puffer auf Basis einer schwachen Säure und der konjugierten Base sind bevorzugt. Es kann sich auch um polymere Puffer oder um Mischungen verschiedener Säuren und/oder Basen handeln. Dem Fachmann sind solche Puffer und deren nutzbarer Pufferbereich bekannt. Für das erfindungsgemäße Bindemittel können alle üblichen, für diesen pH-Bereich geeigneten Puffersysteme verwendet werden und der Fachmann kann sie ohne weiteres auswählen.

Der Puffer kann mit einem organischen Lösungsmittel, bevorzugt Alkohol, wie Methanol oder Ethanol, gebildet werden. Bei Puffern auf Basis organischer Säuren kann das Salz der organischen Säure z.B. 1 bis 20 Gew.-% des Puffers ausmachen. Puffer sind im Handel erhältlich oder können vom Fachmann ohne weiteres hergestellt werden.

Beispiele für geeignete Puffer sind (in Klammern ist der wirksame Pufferbereich angegeben): Essigsäure/Acetat-Puffer (pH = 3,7-5,7), Citronensäure/Trinatriumcitrat-Puffer (pH = 2,2-8), Weinsäure/Tartrat-Puffer, 2-(4-(2-Hydroxyethyl)-1-piperazinyl)ethansulfonsäure (pH = 6,8-8,2) und 2-(N-Morpholino)ethansulfonsäure (pH = 5-7). Puffer mit organischen Säuren sind besonders bevorzugt. Besonders bevorzugt ist ein Essigsäure/Acetat-Puffer, mit dem der pH-Wert auf etwa 4,75 eingestellt werden kann. Puffer auf Carbonsäurebasis sind bevorzugt, da sie neben der Pufferwirkung auch die offene Zeit bzw. Gelierzeit verlängern können.

Das Bindemittel kann ferner einen Komplexbildner enthalten. Dies ist insbesondere bevorzugt, wenn das Bindemittel ein Puffersystem umfasst. Durch den Komplexbildner können "Spitzen", z.B. von Oxidkomponenten, die Metallkomponenten wie z.B. Al, Ti oder Zr enthalten, "deaktiviert" werden. Der Komplexbildner kann z.B. eine organische Säure oder ein Chelatbildner sein. Der Komplexbildner eignet sich bevorzugt zur Komplexierung von höherwertigen Ionen bzw. Metallionen, wie z.B. Al- , Ti- oder Zr-Ionen. Diese sind dem Fachmann bekannt.

Beispiele für Komplexbildner bzw. Chelatbildner sind α- und ß-Hydroxycarbonylverbindungen, wie Hydroxycarbonsäuren, -ketone oder -aldehyde und ihre Analoga wie ß-Diketone, wie Acetylaceton und Ethylacetoacetat, Polyoxycarbonsäuren, Polyamine, wie Ethylendiamin, Aminoalkohole wie Triethanolamin, Dialkyldithiophosphat, Dodecylbenzolsulfonsäure, EDTA und Nitrilotriessigsäure, wobei ß-Diketone besonders bevorzugt sind. Beispiele für organische Säuren sind Essigsäure, Citronensäure, Weinsäure, Ölsäure und Palmitinsäure. Der Komplexbildner wird bevorzugt so gewählt, dass er beim eingestellten pH-Wert eine komplexbildende Wirkung auf die im Bindemittel enthaltenen Metallkationen, wie z.B. Al³⁺, Zr⁴⁺ oder Ti⁴⁺, bzw. den daraus abgeleiteten Oxiden besitzt.

Dem Bindemittel können Lösungsmittel, bevorzugt polare Lösungsmittel, zugesetzt werden. Beispiele sind Alkohole, vorzugsweise niedere aliphatische Alkohole (C₁-C₈-Alkohole), wie Methanol, Ethanol, 1-Propanol, Isopropanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₄-Alkoholen, Amide, wie Dimethylformamid, Tetrahydrofuran, Dioxan, Sulfoxide, Sulfone oder Butylglycol und deren Gemische. Bevorzugt werden Alkohole verwendet. Es können auch hochsiedende Lösungsmittel eingesetzt werden; z. B. Polyether wie Triethylenglycol, Diethylenglycoldiethylether und Tetraethylenglycoldimethylether.

Andere herkömmliche Additive, die dem Bindemittel gegebenenfalls zugegeben werden können, sind z. B. Farbstoffe, Pigmente, Viskositätsregulatoren und Tenside. Für die Herstellung von Emulsionen des Bindemittels können z.B. die bei Siliconemulsionen üblichen stabilisierenden Emulgatoren wie z.B. Tween® 80 und Brij® 30 herangezogen werden.

Das erhaltene erfindungsgemäße Bindemittel ist insbesondere flüssig und liegt vorzugsweise partikelfrei als Lösung oder Emulsion vor, es ist bevorzugt frei von kristallinen Produkten oder Partikeln, dies kann z.B. durch Photonenkorrelationsspektroskopie (PCS) nachgewiesen werden.

Das Bindemittel und Verfahren der Erfindung wird bevorzugt eingesetzt, wenn in der geologischen Formation oder einer darunterliegenden geologischen Formation Erdöl oder Erdgas enthalten ist. Das erfindungsgemäße Bindemittel wird zur Stabilisierung der Gelbildungszeit des Bindemittels bei der Verfestigung von geologischen Formationen eingesetzt. Alle vorstehenden Ausführungen zu den Merkmalen des Bindemittels und Verfahrens der Erfindung gelten für die Verwendung entsprechend.

Es folgen Beispiele zur Erläuterung der Erfindung, die diese aber in keiner Weise einschränken sollen.

### Beispiel 1

33,1 g MPTES wurden mit 2,6 g 10 Gew.-% HCl zur Reaktion gebracht. Nach dem Klarpunkt wurden 13 g TET zugesetzt. Nach vollständigem Einbau des Titanalkoholats in die Si-Matrix wurden 3,1 g Wasser zugesetzt. Anschließend wurden unter Rührern 51 g Butandioldimethacrylat und 4 g APTES zu dem Hydrolysat zugesetzt, um ein Bindemittel A herzustellen.

30 g des vorstehend hergestellten Bindemittels A wurden mit 300 mg Vazo®67 versetzt und solange bei RT gerührt bis sich der Feststoff im Bindemittel komplett aufgelöst hat.

### Vergleichsbeispiel 1

30 g des vorstehend in Beispiel 1 hergestellten Bindemittels A wurden statt mit der Azoverbindung mit 600 mg Trigonox®121 versetzt und kurz bei RT verrührt.

### Ergebnisse der Gelzeiten

Den mit Azoinitiator oder Peroxidinitiator versetzten Bindemitteln aus Beispiel 1 bzw. Vergleichsbeispiel 1 wurden verschiedene katalytisch aktive Substanzen zugesetzt und die Gelzeiten bei 50°C genüber einer Referenz chne Zugabe einer katalytisch aktiven Substanz untersucht. Bei den Sanden 1 und 2 handelt es sich um Proben aus verschiedenen geologischen Formationen.

| | Referenz | + Fe²⁺ (50 ppm) | + Fe³⁺ (100 ppm) | + Cu²⁺ (50 ppm) | Coiled tubing | Sand 1 (20 Gew.-%) | Sand 2 (20 Gew.-%) |
|---|---|---|---|---|---|---|---|
| Bsp. 1 AZO-Initiator | 120 min | 115 min | 125 min | 330 min | 150 min | 140 min | 130 min |
| Vgl.-bsp. 1 Peroxid-Initiator | 125 min | 95 min | 90 min | 30 min | 60 min | 75 min | 105 min |

## Patentansprüche

1. Verwendung eines Bindemittels, umfassend eine Mischung aus
A) einem Heterokondensat, erhältlich durch Hydrolyse und Kondensation von mindestens einer hydrolysierbaren Siliciumverbindung, die ausgewählt ist aus einem Silan der allgemeinen Formel (III)
RₙSiX₄₋ₙ (III)
worin die Reste R hydrolytisch nicht abspaltbare Gruppen darstellen, die Reste X gleich oder verschieden sind und Alkoxy darstellen und n den Wert 1 hat, wobei R Alkyl darstellt, der eine polymerisierbare Gruppe ausgewählt aus Methacryloyl, und Methacryloyloxy, und eine zweiwertige Brückengruppe zur Anbindung an das Si, ausgewählt aus Alkylen-Brückengruppen, umfasst,
und mindestens einer Metallverbindung, wobei das Metall ausgewählt ist aus Ti,
B) mindestens einem organischen polymerisierbaren Monomer oder Oligomer, das mindestens eine C-C-Doppelbindung aufweist, die eine olefinische polymerisierbare Gruppe ausgewählt aus Methacryloyl oder Methacryloyloxy ist, und
C) mindestens einem thermischen Polymerisationsinitiator ohne Peroxidfunktionalität, wobei der Polymerisationsinitiator eine Azoverbindung darstellt,
zur Stabilisierung der Bindemittel-Gelbildungszeit bei der Verfestigung einer geologischen Formation in Anwesenheit einer oder mehrerer katalytisch aktiven Substanzen, wobei es sich bei der katalytisch aktiven Substanz um Übergangsmetallionen ausgewählt aus Eisenionen handelt.

2. Verwendung nach Anspruch 1, bei dem das Bindemittel in die Formation infiltriert wird, gegebenenfalls ein Teil des infiltrierten Bindemittels durch Spülen mit einem Gas oder einer Flüssigkeit wieder ausgetrieben wird, und das in der Formation verbleibende Bindemittel gehärtet wird.

3. Verwendung nach Anspruch 2, wobei ein Stahlrohr in der geologischen Formation eingebracht ist.

4. Verwendung nach Anspruch 3, wobei das Bindemittel durch das Stahlrohr in die Formation eingebracht wird.

5. Verwendung nach irgendeinem der Ansprüche 2 bis 4, wobei der Polymerisationsinitiator eine Azoverbindung ist, die aus Azobisnitrilen, Azobiscarbonsäureestern und Azobiscarbonsäureamiden ausgewählt ist.

6. Verwendung nach irgendeinem der Ansprüche 2 bis 5, wobei das Bindemittel einen Puffer, einen Komplexbildner, ein Polysiloxan mit mindestens einer reaktiven Gruppe ausgewählt aus Vinyl, Hydrid, Silanol, Alkoxy, Amine, Epoxy, Carbinol, Methacrylat, Acrylat, Mercapto, Acetoxy, Chlorid und Dimethylamin und/oder ein Lösungsmittel umfasst.

7. Verwendung nach Anspruch 6, wobei das Lösungsmittel ein polares Lösungsmittel ausgewählt aus Alkoholen, wie Isopropanol, Ethern und Monoethern von Diolen wie Butylenglycol ist.

8. Verwendung nach irgendeinem der Ansprüche 2 bis 7, wobei das Heterokondensat ein Metallosiloxan ist und Heteroatomeinheiten von Ti, die über Sauerstoffbrücken in das Siloxangerüst eingebaut sind, und Siloxaneinheiten enthält.

9. Verwendung nach irgendeinem der Ansprüche 2 bis 8, **dadurch gekennzeichnet, dass** das Bindemittel partikelfrei ist.

10. Verwendung nach irgendeinem der Ansprüche 2 bis 9, wobei der Mischung des Bindemittels ferner mindestens eine monomere hydrolysierbare Siliciumverbindung, die einen nicht hydrolysierbaren Rest mit mindestens einer hydrophilen Gruppe umfasst, zugegeben wird, wobei die mindestens eine monomere hydrolysierbare Siliciumverbindung ein Silan der allgemeinen Formel (IIIa) ist
R'ₙSiX₄₋ₙ (IIIa)
worin die Reste R' hydrolytisch nicht abspaltbare Gruppen darstellen, wobei mindestens ein Rest R' eine Alkylgruppe ist, die mindestens eine hydrophile Gruppe ausgewählt aus einer Aminogruppe als Substituenten aufweist, die Reste X gleich oder verschieden sind und Alkoxy darstellen, und n den Wert 1 hat, wobei der hydrolytisch nicht abspaltbare Rest R' mit mindestens einer hydrophilen Gruppe eine zweiwertige Alkylen-Brückengruppe, über die die hydrophile Gruppe mit dem Siliciumatom verbunden ist, umfasst.

11. Verwendung nach irgendeinem der Ansprüche 2 bis 10, wobei ein Teil des infiltrierten Bindemittels durch Spülen mit einer Flüssigkeit wieder ausgetrieben wird und die Flüssigkeit eine wässrige salzhaltige Flüssigkeit ist.

12. Verwendung nach irgendeinem der Ansprüche 2 bis 11, wobei in der geologischen Formation oder einer darunterliegenden geologischen Formation Erdöl oder Erdgas enthalten ist.

## Claims

1. Use of a bonding agent comprising a mixture of
A) a heterocondensate, obtainable by hydrolysis and condensation of at least one hydrolysable silicon compound, selected from a silane of the general formula (III)
RₙSiX₄₋ₙ (III)
wherein the residues R represent hydrolytically non-separable groups, the residues X are the same or different and represent alkoxy and n has the value of 1, wherein R represents alkyl comprising a polymerisable group selected from methacryloyl and methacryloyloxy, and a divalent bridging group for bonding to the Si, selected from alkylene bridging groups,
and at least one metal compound, wherein the metal is selected from Ti,
B) at least one organic, polymerisable monomer or oligomer, which has at least one C-C double bond, which is an olefinically polymerisable group selected from methacryloyl or methacryloyloxy, and
C) at least one thermal polymerisation initiator without peroxide functionality, wherein the polymerisation initiator represents an azo compound,
to stabilise the bonding agent gelation time in the consolidation of a geological formation in the presence of one or more catalytically active substances, wherein the catalytically active substance is transition metal ions selected from iron ions.

2. The use according to claim 1, in which the bonding agent is infiltrated into the formation, a proportion of the infiltrated bonding agent is optionally expelled by flushing with a gas or a liquid, and the bonding agent remaining in the formation is cured.

3. The use according to claim 2, wherein a steel pipe is introduced into the geological formation.

4. The use according to claim 3, wherein the bonding agent is introduced into the formation through the steel pipe.

5. The use according to any one of claims 2 to 4, wherein the polymerisation initiator is an azo compound selected from azobisnitriles, azobiscarbonic acid esters and azobiscarbonic acid amides.

6. The use according to any one of claims 2 to 5, wherein the bonding agent comprises a buffer, a complexing agent, a polysiloxane with at least one reactive group selected from vinyl, hydride, silanol, alkoxy, amines, epoxy, carbinol, methacrylate, acrylate, mercapto, acetoxy, chloride and dimethylamine, and/or a solvent.

7. The use according to claim 6, wherein the solvent is a polar solvent selected from alcohols, such as isopropanol, ethers and monothers of diols, such as butylene glycol.

8. The use according to any one of claims 2 to 7, wherein the heterocondensate is a metallosiloxane and includes heteroatom units of Ti, which are incorporated into the siloxane structure by way of oxygen bridges, and siloxane units.

9. The use according to any one of claims 2 to 8, **characterised in that** the bonding agent is free of particles.

10. The use according to any one of claims 2 to 9, wherein at least one monomeric hydrolysable silicon compound, which comprises a non-hydrolysable residue with at least one hydrophilic group, is further added to the mixture of the bonding agent, wherein the at least one monomeric, hydrolysable silicon compound is a silane of the general formula (IIIA)
R'ₙSiX₄₋ₙ (IIIa)
wherein the residues R' represent hydrolytically non-separable groups, wherein at least one residue R' is an alkyl group which has at least one hydrophilic group selected from an amino group as a substituent, the residues X are the same or different and represent alkoxy and n has the value of 1, wherein the hydrolytically non-separable residue R' with at least one hydrophilic group comprises a divalent alkylene bridging group by which the hydrophilic group is bonded to the silicon atom.

11. The use according to any one of claims 2 to 10, wherein a proportion of the infiltrated bonding agent is expelled by flushing with a liquid and the liquid is an aqueous, salt-containing liquid.

12. The use according to any one of claims 2 to 11, wherein crude oil or natural gas is contained in the geological formation or a geological formation situated beneath it.

## Revendications

1. Utilisation d'un liant, comprenant un mélange composé
A) d'un hétérocondensat, pouvant être obtenu par hydrolyse et condensation d'au moins un composé de silicium hydrolysable, qui est choisi parmi un silane de la formule générale (III)
RₙSiX₄₋ₙ (III)
dans laquelle les radicaux R représentent des groupes non séparables de manière hydrolytique, les radicaux X sont identiques ou différents et représentent un alcoxy, et n a la valeur de 1, dans lequel R représente un alkyle, qui comprend un groupe polymérisable choisi parmi le groupe méthacryloyle et méthacryloyloxy, et un groupe de pontage bivalent destiné à être lié au Si, choisi parmi des groupes de pontage alkylène,
et au moins un composé métallique, dans lequel le métal est choisi parmi Ti,
B) d'au moins un monomère ou oligomère polymérisable organiquement, qui présente au moins une double liaison C-C, qui est un groupe polymérisable oléfinique choisi parmi le groupe groupe méthacryloyle ou méthacryloyloxy, et
c) d'au moins un initiateur de polymérisation thermique sans fonctionnalité peroxyde, dans lequel l'initiateur de polymérisation représente un composé azoïque,
aux fins de la stabilisation du temps de gélification du liant lors de la solidification d'une formation géologique en présence d'une ou de plusieurs substances actives catalytiquement, dans lequel la substance active catalytiquement est des ions de métal de transition choisis parmi des ions de fer.

2. Utilisation selon la revendication 1, où le liant est infiltré dans la formation, éventuellement une partie du liant infiltré est à nouveau expulsée par rinçage avec un gaz ou un liquide, et le liant restant dans la formation est durci.

3. Utilisation selon la revendication 2, dans laquelle un tube en acier est introduit dans la formation géologique.

4. Utilisation selon la revendication 3, dans laquelle le liant est introduit dans la formation par le tube en acier.

5. Utilisation selon l'une quelconque des revendications 2 à 4, dans laquelle l'initiateur de polymérisation est un composé azoïque, qui est choisi parmi des azobisnitriles, des esters d'acide carboxylique azobis et des amides d'acide carboxylique azobis.

6. Utilisation selon l'une quelconque des revendications 2 à 5, dans laquelle le liant comprend un tampon, un agent de chélation, un polysiloxane avec au moins un groupe réactif choisi parmi vinyle, hydride, silanol, alcoxy, amine, époxy, carbinol, méthacylate, acrylate, mercapto, acétoxy, chlorure et diméthylamine et/ou un solvant.

7. Utilisation selon la revendication 6, dans laquelle le solvant est un solvant polaire choisi parmi des alcools, tels que l'isopropanol, les éthers et les monoéthers de diols tels que le butylène glycol.

8. Utilisation selon l'une quelconque des revendications 2 à 7, dans laquelle l'hétérocondensat est un métallosiloxane et contient des motifs d'hétéroatome de Ti, qui sont intégrés dans la structure siloxane par des ponts oxygène, et des motifs de siloxane.

9. Utilisation selon l'une quelconque des revendications 2 à 8, **caractérisée en ce que** le liant est sans particule.

10. Utilisation selon l'une quelconque des revendications 2 à 9, dans laquelle en outre au moins un composé de silicium monomère hydrolysable, qui comprend un radical non hydrolysable avec au moins un groupe hydrophile est ajouté au mélange du liant, dans laquelle l'au moins un composé de silicium monomère hydrolysable est un silane de la formule générale (IIIa)
R'ₙSiX₄₋ₙ (IIIa),
dans laquelle les radicaux R' représentent des groupes non séparables de manière hydrolytique, dans laquelle au moins un radical R' est un groupe alkyle, qui présente au moins un groupe hydrophile choisi par un groupe amino en tant que substituants, les radicaux X sont identiques ou différents et représentent un alcoxy, et n a la valeur de 1, dans laquelle le radical R' non séparable de manière hydrolytique avec au moins un groupe hydrophile comprend un groupe de pontage alkylène bivalent, par l'intermédiaire duquel le groupe hydrophile est relié à l'atome de silicium.

11. Utilisation selon l'une quelconque des revendications 2 à 10, dans laquelle une partie du liant infiltré est expulsée à nouveau par rinçage avec un liquide et le liquide est un liquide aqueux contenant du sel.

12. Utilisation selon l'une quelconque des revendications 2 à 11, dans laquelle du pétrole ou du gaz naturel est contenu dans la formation géologique ou dans une formation géologique située en dessous.
